# DEMANDE DE BREVET EUROPEEN

(11) **EP 1 946 972 A1**
(43) Date de publication de la demande: **23.07.2008**
(21) Numéro de dépôt: 08305004.7
(22) Date de dépôt: 16.01.2008
(51) Int. Cl.: B60R 16/00, H02M 3/18

(54) **Dispositif d'élévation temporaire de tension électrique pour organe automobile**

(30) Priorité: 19.01.2007 FR 0752756
(71) Demandeur: Peugeot Citroën Automobiles SA, 78943 Vélizy-Villacoublay Cedex (FR)
(72) Inventeur: Carubelli, Stéphane, 94550, CHEVILLY LARUE (FR); Salvan, Nicolas, 77340, PONTAULT COMBAULT (FR)

(57) **Abrégé**

La présente invention concerne un dispositif d'élévation temporaire de tension électrique pour organe automobile.

Selon l'invention, le dispositif est caractérisé en ce qu'il comprend un moyen de pilotage (P) réalisé notamment à partir d'éléments passifs qui provoque le basculement du moyen de commutation (K) d'un état à l'autre selon la valeur de tension de claquage d'une première diode Zéner (Dz2).

L'invention trouve application dans le domaine de l'automobile.

## Description

La présente invention concerne un dispositif d'élévation temporaire de tension électrique pour organe automobile. Elle concerne, en particulier, un dispositif permettant d'élever temporairement la tension électrique aux bornes d'un organe électrique automobile de forte puissance lorsque la demande énergétique de la part de ce dernier est importante et lorsque la tension électrique délivrée par le réseau de bord est insuffisante.

L'organe de forte puissance peut être, par exemple, un organe électrique de type « Liaison Au Sol » dont il faut augmenter la tension électrique aux bornes dans certaines phases de vie critiques, telles que la fin de braquage d'une direction assistée électrique (DAE). Dans cette phase, il faut également préserver la qualité du réseau de bord automobile et les autres organes électriques consommateurs associés.

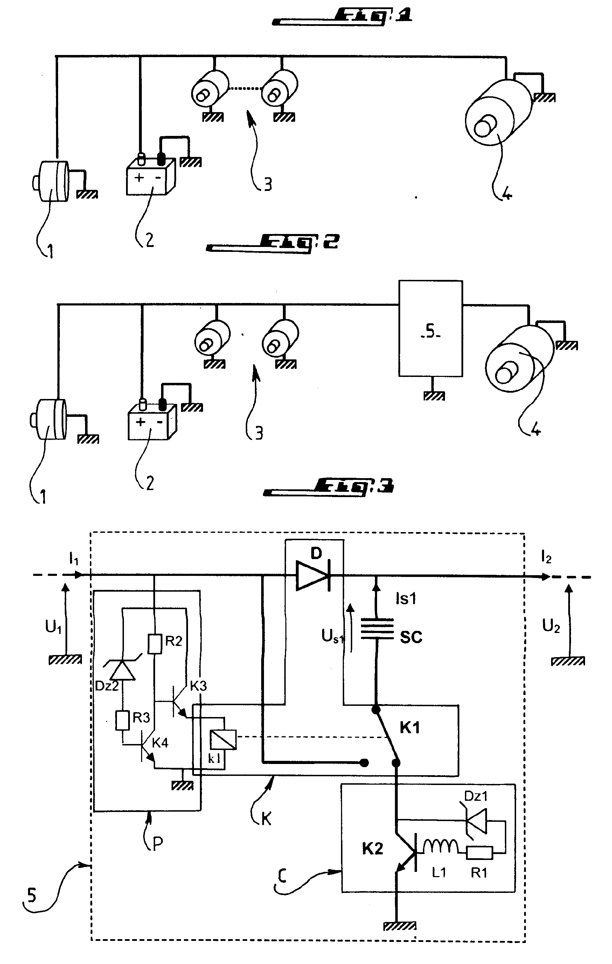

Sur le schéma de la figure 1, on a représenté une architecture de réseau de bord automobile de type classique. Le réseau comporte, de manière générale, une source d'énergie principale qui peut être par exemple un alternateur 1 et/ou une batterie 2. Le réseau de bord comporte également un certain nombre d'organes électriques (feux, écrans de tableau de bord, climatisation, etc.) et de faisceaux électriques qui assurent les liaisons entre tous ces éléments. On peut classer tous les organes électriques en deux catégories : d'une part, les organes électriques dits « sensibles », référencés 3, en nombre n sur la figure 1, dont le fonctionnement est sensible aux variations de la tension électrique de réseau de bord et, d'autre part, les organes électriques de forte puissance, dont l'un est représenté schématiquement en 4, qui sont des organes électriques « perturbateurs » parce qu'ils génèrent des perturbations sur la tension électrique de réseau de bord.

Il est connu qu'une architecture classique de réseau de bord automobile comporte un dispositif d'élévation temporaire de tension électrique pour organe de forte puissance.

Sur le schéma de la figure 2, on a représenté un tel dispositif référencé 5. Les éléments de la figure 2 qui portent les mêmes références que celles des éléments de la figure 1 désignent les mêmes éléments.

Le dispositif 5 se positionne en série et au plus près de l'organe de forte puissance 4 pour lequel une élévation temporaire de la tension électrique à ses bornes est nécessaire.

Selon la demande de brevet français FR 2,853,154, déposée au nom de Peugeot Citroën Automobiles SA, le dispositif 5 comporte un élément de stockage d'énergie électrique rechargeable de type condensateur de grande valeur capacitive et un moyen de commutation pour permettre, d'une part, une charge du condensateur à partir de la source d'énergie principale du réseau de bord et, d'autre part, un branchement de ce condensateur en série avec l'organe de forte puissance 4 pour assurer l'élévation de la tension électrique aux bornes dudit organe.

On peut remarquer que selon cette demande de brevet français, le dispositif 5 n'est activé que lors de l'activation de l'organe de forte puissance 4.

De plus, le moyen de commutation est associé à un moyen de pilotage, en l'occurrence un calculateur, qui commande en temps réel sa commutation. L'utilisation d'un tel moyen de pilotage induit un surcoût financier important du dispositif 5 du fait de sa complexité de réalisation.

L'invention a pour but de remédier à cet inconvénient en proposant un dispositif d'élévation temporaire de la tension électrique pour organe de forte puissance qui ne requiert pas un moyen de pilotage associé au dispositif pour commander la commutation des moyens de commutation mais qui requiert l'usage de composants essentiellement passifs, donc moins coûteux, pour commander automatiquement et de manière moins complexe la commutation de ces moyens de commutation.

A cet effet, la présente invention concerne un dispositif d'élévation temporaire de tension électrique pour organe automobile destiné à un réseau de bord électrique de véhicule comportant une source d'énergie électrique principale, au moins un organe électrique de forte puissance activé pendant de courtes périodes de temps, un élément de stockage d'énergie électrique rechargeable, un moyen de commutation permettant de passer d'un premier état, dans lequel l'organe de forte puissance est alimenté directement par la tension électrique de réseau de bord et ledit élément de stockage d'énergie électrique rechargeable est rechargé par la source d'énergie électrique principale, à un second état, dans lequel, pendant lesdites courtes périodes de temps, l'organe de forte puissance est alimenté par une tension électrique supérieure à celle délivrée dans le premier état, le dispositif étant caractérisé en ce qu'il comprend un moyen de pilotage réalisé notamment à partir d'éléments passifs qui provoque le basculement du moyen de commutation d'un état à l'autre selon la valeur de tension de claquage d'une première diode Zéner.

Avantageusement, le moyen de pilotage provoque le basculement du moyen de commutation dans le second état dès lors que le niveau de tension électrique d'entrée du dispositif est inférieur à une valeur de seuil déterminée selon la valeur de tension de claquage de la première diode Zéner, et provoque le basculement dudit moyen de commutation dans ledit premier état dès que le niveau de tension électrique d'entrée du dispositif est supérieur à ladite valeur de seuil.

Selon un mode de réalisation, le moyen de commutation comporte une diode, un relais commandant un premier commutateur qui bascule selon les indications données par le moyen de pilotage.

Selon un mode de réalisation, la première diode Zéner est associée au relais via un pont de Darlington.

Avantageusement, le dispositif comporte un moyen de contrôle du courant de charge de l'élément de stockage d'énergie électrique rechargeable.

Selon un mode de réalisation, ledit moyen de contrôle du courant de charge comporte une deuxième diode Zéner pilotant la commutation d'un deuxième commutateur destiné à arrêter la charge de l'élément de stockage d'énergie rechargeable dès que la tension inverse de la deuxième diode Zéner est inférieure à sa tension de claquage.

Avantageusement, le deuxième commutateur étant un transistor, la commutation du transistor est pilotée par un circuit reliant son collecteur à sa base, de type série, qui comporte la deuxième diode Zéner et un premier ensemble série de type résistif-inductif.

Avantageusement, le premier ensemble série de type résistif-inductif est associé à un circuit d'augmentation du courant de charge de l'élément de stockage d'énergie électrique rechargeable.

Selon un mode de réalisation, le circuit d'augmentation du courant de charge comporte un transistor destiné, lors de la charge de l'élément de stockage d'énergie électrique rechargeable, à mettre en parallèle un deuxième ensemble série de type résistif-inductif avec le premier ensemble série de type résistif-inductif.

Avantageusement, un circuit de contrôle de l'instant de début d'augmentation du courant de charge est associé au circuit d'augmentation du courant de charge, l'instant auquel le circuit d'augmentation du courant de charge produit ses effets étant déterminé par la valeur de la tension de claquage d'une troisième diode Zéner.

Avantageusement, le dispositif comporte plus d'une association entre un circuit de contrôle de l'instant de début d'augmentation du courant de charge et un circuit d'augmentation du courant de charge.

Avantageusement, un troisième commutateur est monté en parallèle avec la diode, le troisième commutateur étant destiné à shunter la diode lorsque le dispositif est soit dans le second état soit dans le premier état et lorsque l'élément de stockage d'énergie électrique rechargeable est en charge.

L'invention sera mieux comprise, et d'autres buts, caractéristiques, détails et avantages de celle-ci apparaîtront plus clairement au cours de la description explicative qui va suivre faite en référence aux dessins schématiques annexés, donnés uniquement à titre d'exemple, illustrant un mode de réalisation de l'invention et dans lesquels :
- la figure 1 représente schématiquement les composants d'un réseau de bord classique d'un véhicule, avec un organe électrique automobile de forte puissance,
- la figure 2 représente schématiquement le réseau de bord de la figure 1, dans lequel est inséré un dispositif connu d'élévation temporaire de tension électrique pour organe électrique automobile de forte puissance,
- la figure 3 représente schématiquement un mode de réalisation du dispositif de l'invention assurant une élévation temporaire de tension électrique pour organe automobile de forte puissance,
- la figure 4 représente schématiquement une variante de réalisation du dispositif d'élévation temporaire de tension électrique pour organe automobile de forte puissance de la figure 3, et
- la figure 5 représente schématiquement une variante de réalisation du dispositif d'élévation temporaire de tension électrique pour organe automobile de forte puissance de la figure 3 ou 4.

On a représenté sur la figure 3 le schéma électrique synoptique d'un exemple de réalisation du dispositif 5 d'élévation temporaire de tension pour organe automobile de forte puissance selon la présente invention.

Le dispositif 5 comporte un moyen de commutation K piloté par un moyen de pilotage P et un élément de stockage d'énergie rechargeable SC, de préférence un condensateur de grande valeur capacitive, dont la charge est contrôlée automatiquement par un moyen de contrôle du courant de charge C.

Le moyen de commutation K permet de passer d'un premier état, dans lequel l'organe de forte puissance 4 est alimenté directement par la tension du réseau de bord et l'élément de stockage d'énergie électrique rechargeable SC est rechargé par la source d'énergie électrique 1 et/ou 2 de la figure 2, à un second état, dans lequel, pendant de courtes périodes de temps, l'organe de forte puissance 4 est alimenté avec une tension supérieure à celle délivrée dans le premier état.

Selon le mode de réalisation de la figure 3, le moyen de commutation K est formé par une diode D, un premier commutateur K1 commandé par un relais électromécanique ou statique référencé k1 qui bascule selon les indications données par le moyen de pilotage P. Le moyen de pilotage P est formé par une diode Zéner Dz2 et un pont de Darlington constitué des résistances R2, R3, et des transistors K3,K4. L'anode de la diode Zéner Dz2 est reliée à la base du transistor K4 via la résistance R3, la cathode de la diode Zéner Dz2 est reliée, d'une part, au collecteur du transistor K3 et, d'autre part, au collecteur du transistor K4 et à la base du transistor K3 via la résistance R2. L'émetteur du transistor K3 est relié à une des bornes du relais k1, l'autre borne du relais k1 étant reliée à la masse. Il en est de même de l'émetteur du transistor K4. La diode Zéner Dz2 est choisie de manière à ce qu'elle soit passante c'est-à-dire que sa tension inverse soit supérieure à sa tension de claquage, lorsque la tension d'entrée U1 du dispositif est supérieure à une valeur de seuil déterminée (10,5V par exemple). A ce moment-là, le transistor K4 est passant, le transistor K3 est bloqué, la diode D est passante et le commutateur K1 se trouve dans l'état de la figure 3. Le dispositif 5 se trouve alors dans le premier état.
I1=I2 et U1=U2

On considère ici que l'élément SC est chargé c'est-à-dire que Is1=0.

Lorsque la tension d'entrée U1 diminue suite à une baisse de la tension du réseau de bord due, par exemple, à une demande forte de puissance de la part des organes électriques 3, la tension inverse de la diode Zéner Dz2 diminue et lorsque cette tension inverse devient inférieure à la tension de claquage de la diode Zéner Dz2, le transistor K4 se bloque et le transistor K3 devient passant du fait que sa base est alors polarisée par la résistance R2, provoquant l'alimentation du relais k1 et par voie de conséquence la commutation du commutateur K1 et le blocage de la diode D. Le dispositif 5 se trouve alors dans le second état, la tension aux bornes de l'organe de forte puissance U2 est égale à U1+Us1.

Selon le mode de réalisation de la fig. 3, le moyen de contrôle du courant de charge C de l'élément SC est constitué d'une deuxième diode Zéner Dz1 qui pilote un commutateur K2, en l'occurrence un transistor. La diode Zéner Dz1 est montée en série avec une résistance R1 une inductance L1, ce circuit reliant la base du transistor K2 et son collecteur. Lorsque le dispositif 5 est dans le premier état (figure 3), et que l'élément SC est déchargé, la tension Us1 est faible, typiquement inférieure à 2,7V. La tension inverse de la diode Zéner Dz1 est alors supérieure à sa tension de claquage et le transistor K2 est passant. Le niveau du courant de charge est régulé par la résistance R1 tandis que sa dynamique est réglée par l'inductance L1. Lorsque l'élément SC est chargé, la tension inverse de la diode Zéner Dz1 est inférieure à sa tension de claquage et le transistor K2 est bloqué, interrompant ainsi le courant de charge de l'élément SC.

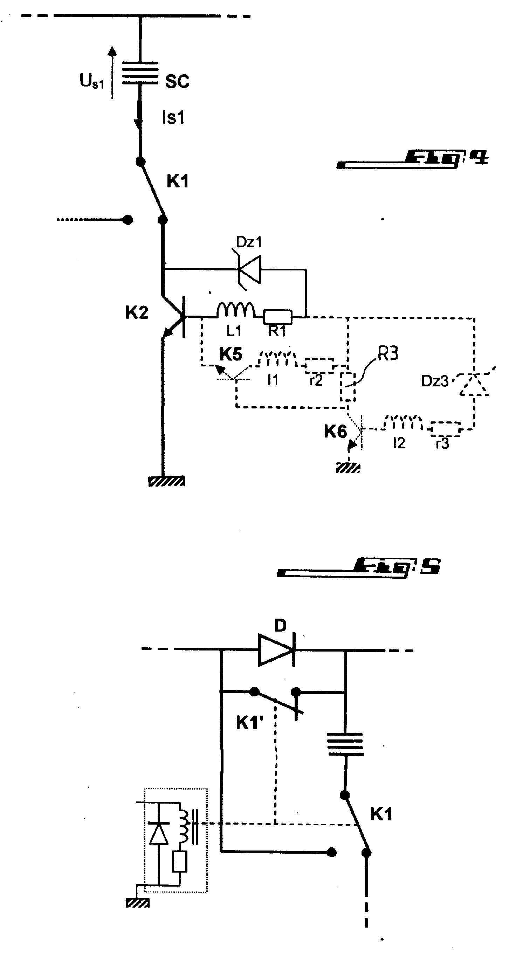

Selon une variante du dispositif 5 représentée à la figure 4, l'ensemble série de type résistif-inductif (R1,L1) est associé à au moins un circuit d'augmentation du courant de charge de l'élément SC. Ce circuit d'augmentation du courant de charge est constitué, selon un mode de réalisation, d'un transistor K5, d'une résistance r2 et d'une inductance 11. La résistance r2 et l'inductance 11 sont montées en série sur le collecteur du transistor K5, l'anode de la diode Zéner Dz1 est reliée, d'une part, à la résistance r2 et, d'autre part, à la base du transistor K5 via une résistance R3. L'émetteur du transistor K5 est relié à la base du transistor K2. Ainsi, lorsque l'élément SC est en charge, le transistor K5 est passant et l'ensemble de type résistif-inductif (R1,L1) est en parallèle avec l'ensemble résistif-inductif (r2,11), diminuant ainsi la valeur de la résistance équivalente de l'ensemble (R1, L1, r2, l1) ce qui provoque l'augmentation de la valeur du courant de charge Is1 et donc la diminution du temps de charge de l'élément SC.

Selon une variante du dispositif 5, un circuit de contrôle de l'instant de début d'augmentation du courant de charge Is1 est associé au circuit d'augmentation du courant de charge. Ce circuit de contrôle de l'instant de début d'augmentation du courant de charge est constitué d'un transistor K6 piloté par un ensemble reliant l'anode de la diode Zéner Dz1 à la base du transistor K6, et constitué d'une résistance r3, d'une inductance 12 montées en série avec une diode Zéner Dz3 choisie de manière à ce qu'elle détermine l'instant à partir duquel le courant de charge Is1 est augmenté.

Selon une autre variante du mode de réalisation de la figure 4, il est possible de monter en parallèle plusieurs ensembles constitués chacun d'un circuit de d'augmentation du courant de charge associé avec un circuit de contrôle de l'instant de début d'augmentation du courant de charge de manière à pouvoir régler plusieurs valeurs de courant de charge Is1 au cours de la charge de l'élément SC.

Selon un mode de réalisation représenté schématiquement à la figure 5, la diode D est associée en parallèle avec un deuxième commutateur K'1 1 destiné à shunter la diode D lorsque le dispositif 5 est soit dans le second état soit dans le premier état et lorsque l'élément SC est en charge. L'avantage de ce commutateur K'1 est d'éviter une chute de tension de quelques centaines de millivolts due aux caractéristiques intrinsèques de la diode D lorsque celle-ci est passante, augmentant ainsi la tension aux bornes soit de l'organe de forte puissance soit de l'élément SC lorsqu'il est en charge. Il est à noter que lors du second état, le commutateur K'1 est ouvert car la chute de tension de la diode est alors nécessaire pour éviter une tension inverse trop importante aux bornes de l'élément SC lorsque ce dernier est complètement déchargé et éviter ainsi sa destruction.

Le dispositif de l'invention a ainsi pour avantage d'augmenter la tension aux bornes d'un organe électrique sur un réseau de bord d'un véhicule automobile sans que les autres organes électriques de ce réseau ne soient perturbés. Il est ainsi possible de disposer d'une puissance supplémentaire lors d'un fonctionnement où le besoin en puissance mécanique est important. En outre, le dispositif ne nécessite qu'un nombre relativement limité de composants et n'a pas besoin de calculateur dédié puisque le dispositif de l'invention est autonome.

## Revendications

1. Dispositif d'élévation temporaire de tension électrique pour organe automobile destiné à un réseau de bord électrique de véhicule comportant une source d'énergie électrique principale (1,2), au moins un organe électrique de forte puissance (4) activé pendant de courtes périodes de temps, un élément de stockage d'énergie électrique rechargeable (SC), un moyen de commutation (K) permettant de passer d'un premier état, dans lequel l'organe de forte puissance (4) est alimenté directement par la tension électrique de réseau de bord et ledit élément de stockage d'énergie électrique rechargeable (SC) est rechargé par la source d'énergie électrique principale (1,2), à un second état, dans lequel, pendant lesdites courtes périodes de temps, l'organe de forte puissance (4) est alimenté par une tension électrique supérieure à celle délivrée dans le premier état, **caractérisé en ce qu'**il comprend un moyen de pilotage (P) réalisé notamment à partir d'éléments passifs qui provoque le basculement du moyen de commutation (K) d'un état à l'autre selon la valeur de tension de claquage d'une première diode Zéner (Dz2).

2. Dispositif selon la revendication 1, **caractérisé en ce que** le moyen de pilotage (P) provoque le basculement du moyen de commutation (K) dans le second état dès lors que le niveau de tension électrique d'entrée du dispositif est inférieur à une valeur de seuil déterminée selon la valeur de tension de claquage de la première diode Zéner (Dz2), et provoque le basculement du moyen de commutation (K) dans le premier état dès que le niveau de tension électrique d'entrée du dispositif est supérieur à la valeur de seuil.

3. Dispositif selon la revendication 1 ou 2, **caractérisé en ce que** le moyen de commutation (K) comporte une diode (D), un relais (k1) commandant un premier commutateur (K1) qui bascule selon les indications données par le moyen de pilotage (P).

4. Dispositif selon la revendication 3, **caractérisé en ce que** la première diode Zéner (Dz2) est associée au relais (k1) via un pont de Darlington.

5. Dispositif selon l'une des revendications 1 à 4, **caractérisé en ce qu'**il comporte un moyen de contrôle du courant de charge (C) de l'élément de stockage d'énergie électrique rechargeable (SC).

6. Dispositif selon la revendication 5, **caractérisé en ce que** le moyen de contrôle du courant de charge (C) comporte une deuxième diode Zéner (Dz1) pilotant la commutation d'un deuxième commutateur (K2) destiné à arrêter la charge de l'élément de stockage d'énergie rechargeable (SC) dès que la tension inverse de la deuxième diode Zéner (Dz1) est inférieure à sa tension de claquage.

7. Dispositif selon la revendication 6, le deuxième commutateur (K2) étant un transistor, **caractérisé en ce que** la commutation dudit transistor (K2) est pilotée par un circuit reliant le collecteur du transistor à sa base, de type série, qui comporte la deuxième diode Zéner (Dz1) et un premier ensemble série de type résistif-inductif (R1,L1).

8. Dispositif selon la revendication 7, **caractérisé en ce que** le premier ensemble série de type résistif-inductif (R1,L1) est associé à un circuit d'augmentation du courant de charge de l'élément de stockage d'énergie électrique rechargeable (SC).

9. Dispositif selon la revendication 8, **caractérisé en ce que** le circuit d'augmentation du courant de charge comporte un transistor (K5) destiné, lors de la charge de l'élément de stockage d'énergie électrique rechargeable (SC), à mettre en parallèle un deuxième ensemble série de type résistif-inductif (11,r2) avec le premier ensemble série de type résistif-inductif (R1, L1).

10. Dispositif selon la revendication 9, **caractérisé en ce qu'**un circuit de contrôle de l'instant de début d'augmentation du courant de charge est associé au circuit d'augmentation du courant de charge, l'instant auquel le circuit d'augmentation du courant de charge produit ses effets étant déterminé par la valeur de la tension de claquage d'une troisième diode Zéner (Dz3).

11. Dispositif selon la revendication 10, **caractérisé en ce qu'**il comporte plus d'une association entre un circuit de contrôle de l'instant de début d'augmentation du courant de charge et un circuit d'augmentation du courant de charge.

12. Dispositif selon l'une des revendications précédentes, **caractérisé en ce qu'**il comporte un troisième commutateur (K'1) monté en parallèle avec la diode (D), le troisième commutateur étant destiné à shunter la diode lorsque le dispositif est soit dans le second état soit dans le premier état et lorsque l'élément de stockage d'énergie électrique rechargeable (SC) est en charge.
